# EUROPEAN PATENT SPECIFICATION

(11) **EP 1 301 894 B1**
(45) Date of publication and mention of the grant of the patent: **24.06.2009**
(21) Application number: 01930796.6
(22) Date of filing: 24.04.2001
(51) Int. Cl.: G06K 9/00

(54) **MULTI-NEURAL NET IMAGING APPARATUS AND METHOD**
VORRICHTUNG UND VERFAHREN ZUR BILDLICHEN DARSTELLUNG MITTELS EINES MULTINEURALEN NETZES
APPAREIL ET PROCEDE D'IMAGERIE PAR RESEAUX NEURONAUX MULTIPLES

(30) Priority: 24.04.2000 US 199237 P
(43) Date of publication of application: 16.04.2003
(73) Proprietor: INTERNATIONAL REMOTE IMAGING SYSTEMS, INC., Chatsworth, CA 91311-5806 (US)
(72) Inventor: KASDAN, Harvey, L., Sherman Oaks, CA 91401-5345 (US); ASHE, Michael, R., Ottawa, Ontario K1Y 2L9 (CA); CHUNG, Minn, Woodland Hills, CA 91364 (US)
(74) Representative: Jackson, David Spence
(86) International application number: PCT/US2001/013451
(87) International publication number: WO 2001/082216

(56) References cited:
- WO-A-91/02330
- US-A- 5 436 978
- US-A- 5 463 548
- US-A- 5 835 633
- US-A- 5 978 497
- US-A- 5 987 158
- US-A- 5 991 028
- ERRINGTON P A ET AL: "Classification of chromosomes using a combination of neural networks" PROCEEDINGS OF THE INTERNATIONAL CONFERENCE ON NEURAL NETWORKS (ICNN). SAN FRANCISCO, MAR. 28 - APR. 1, 1993, NEW YORK, IEEE, US, vol. 1, 28 March 1993 (1993-03-28), pages 1236-1241, XP010111630 ISBN: 0-7803-0999-5

## Description

This invention relates to an imaging apparatus for detecting and classifying biological particles.

Biological particle analysis apparatuses are well known in the art. See for example U.S. Patents Nos. 4,338,024 and 5,436,978, assigned to the present assignee, which describe a prior art machine that uses a computer having a stored fixed program to detect and to classify detected biological particles.

Standard decision theory that is used to sort biological particle images is well known, and tends to sort particles by classification in a serial fashion. More specifically, for a urine sample containing a plurality of particle types, the particle images are searched for one or more particle features unique to a single particle type, and those images are extracted. This process is repeated for other particles one particle at a time. The problem with this methodology is that each particle type can exhibit a range of values for the searched particle feature(s), and the range of values can overlap with those of other particle types. There is also the problem of artifacts, which are particle images that have no clinical significance, e.g. talc or hair, or cannot be classified due to the sensitivity of the imaging device or other problems with the image (e.g. boundary of particle undefined due to partial capture). Artifact particle images need to be disregarded from the analysis in such a way as to not adversely affect the overall accuracy of the particle analysis. Thus, it can be difficult to accurately and reliably classify particles in a sample containing artifacts.

Most biological particle classification devices further necessitate manual manipulation to accurately classify the particles in the sample. While particle features can be used to segregate particle images by particle type, a trained user is needed to verify the result.

Neural net computers are also well known. The advantage of a neural net computer is its ability to "learn" from its experiences, and thus a neural net computer, in theory, can become more intelligent as it is trained.

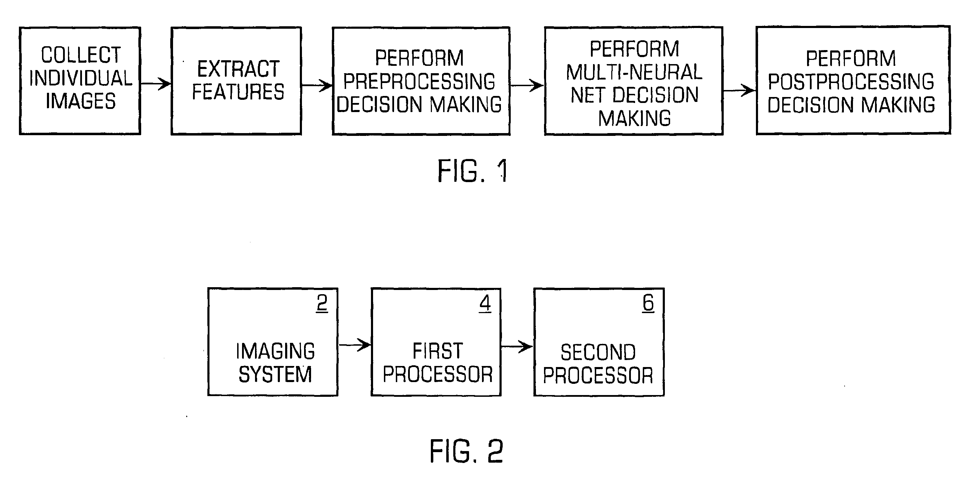

US Patent 5, 463, 548 describes the successive use of three neural networks in the diagnosis of interstitial lung disease. Each of the neural networks is supplied with all 20 of the relevant clinical data inputs. The first neural network distinguishes between normal and abnormal patterns of clinical data. A detected abnormal pattern of clinical data is supplied to a second neural network that distinguishes between interstitial lung diseases and other diseases. A detected interstitial lung disease pattern is supplied to a third neural network that distinguishes 9 different types of interstitial lung disease. Another neural network may be added to distinguish among the other diseases such as primary lung cancer, pneumococcal pneumonia, pulmonary embolism, mediastinal tumour, etc. Figure 2 of US Patent 5, 463, 548 illustrates the third neural network, showing the 20 neurons of the input layer and the 9 neurons of the output layer, and a two-neuron hidden layer.

US Patent 5, 835, 633 describes an optical character recognition system in which extracted features of a scanned character are supplied both to a coarsely classifying neural network and to a plurality of finely classifying neural networks. One or more of the finely classifying networks may be disabled by output from the coarsely classifying network together with additional data. The outputs from a finely classifying network are weighted by multiplication by output from the coarsely classifying network. A candidate selector combines and orders the multiplier output lists to provide a list of target optical characters ranked by confidence value. The list may be limited to a certain number of top candidates. The confidence values indicate the estimated probabilities that each target character correctly corresponds to the input character. The confidence values disclosed are specific to graphical linguistic and numerical characters.

US Patents 5978497 and 5987158 describe classification of cells and other objects in a biological specimen by a system using a microscope and image processing apparatus. In this known system features such as size, shape, density, and texture of the images of objects are extracted, i.e. measured, and groups of the extracted features are selected and used in a classification process to classify objects as artifacts, normal cells, and abnormal cells, so that the clinical significance of a slide bearing the specimen can be assessed.

According to the present invention there is provided an imaging apparatus for detecting and classifying biological particles contained in an individual human urine sample into a plurality of different final classification classes including the classes of non-squamous epithelial cell, unclassified crystal, mucus, sperm, yeast, budding yeast, white blood cell clumps, and white blood cells on the basis of a plurality of features of shape, symmetry, skeletonization, size, photometric properties, and texture of images of the particles, the apparatus being defined by claim 1 hereinafter to which reference should now be made.

A preferred embodiment of the present invention takes the form of a multi-neural net image detecting and classification apparatus. The multi-neural net more efficiently uses the available information, which of necessity is finite, in that it more effectively partitions the decision space, thereby allowing this information to be used to make fewer decisions at each stage while still covering all outcomes with its totality of decisions. In addition, the multi-neural net apparatus measures certainty at multiple stages of processing in order to force images to an abstention class, e.g. artifact. In some sense one can view this multi-neural net apparatus as forcing the image data to run a gauntlet where at each stage of the gauntlet it is quite likely to be placed in an "I don't know" category. This is much more powerful than simply running through a single net because in essence what is accomplished is multiple fits of the data to templates which are much better defined than a single template could be because of the more effective use of the information.

The multi-neural net apparatus uses a large set of particle features and a training method, which involves not simply a single pass through the training set, but selecting from a number of nets and then reducing the feature vector size. Finally, preprocessing and post processing enable heuristic information to be included as part of the decision making process. Post processing enables contextual information either available from other sources or gleaned from the actual decision making process to be used to further enhance the decisions.

Such an imaging apparatus having a plurality of neural nets can be used to detect and classify biological particles and more particularly, for detecting and classifying biological particles from human urine.

The invention will now be described by way of example with reference to the accompanying drawings, in which:-
Fig. 1 is a flow diagram of steps in the operation of a preferred embodiment of the present invention.
Fig. 2 is a schematic diagram of the preferred apparatus embodying the present invention.
Figs. 3A and 3B are flow diagrams illustrating the boundary enhancement of the preferred embodiment.
Fig. 4 is a diagram illustrating the symmetry feature extraction of the preferred embodiment.
Figs. 5A to 5D are drawings illustrating the skeletonization of various shapes.
Fig. 6A is a flow diagram showing the LPF scan process of the preferred embodiment.
Fig. 6B is a flow diagram of the neural net classification used with the LPF scan process of the preferred embodiment.
Fig. 7A is a flow diagram showing the HPF scan process of the preferred embodiment.
Fig. 7B is a flow diagram of the neural net classification used with the HPF scan process of the preferred embodiment.
Fig. 8 is a schematic diagram of the neural net used with the preferred embodiment.
Fig. 9A to 9C are tables showing the particle features used with the various neural nets in the LPF and HPF scan processes of the preferred embodiment.

A preferred embodiment of the present invention provides apparatus for making decisions about the classification of individual particle images in an ensemble of images of biological particles for the purpose of identifying each individual image, and determining the number of images in each given class of particles.

Fig. 1 illustrates 5 basic steps:
1) Collect individual images,
2) Extract particle features from each individual image,
3) Apply certain pre-processing rules to determine classifications of individual images or how the classification process will be performed.
4) Classify the individual images using a multiple neural net decision making structure, and
5) Analyse the ensemble of decisions or a subset of the ensemble of decisions to determine the overall classification of the ensemble or changes to classifications of certain subsets or individual images.

The individual neural nets used are trained to make decisions, and the nets used in the final decision-making are selected from among multiple nets produced by the training procedure.

There are three major hardware elements that are used to implement the preferred embodiment: an imaging system 2, a first processor 4 and a second processor 6. These hardware elements are schematically illustrated in Fig. 2.

Imaging system 2 is used to produce images of fields of view of a sample containing the particles of interest. Imaging system 2 is preferably a well known flow microscope as described in U.S. Patents 4,338,024, 4,393,466, 4,538,299 and 4,612,614. The flow microscope produces images of successive fields containing particles as they flow through a flow cell.

First processor 4 analyzes the images of successive fields, and isolates the particles in individual patches. A patch extraction apparatus (such as that described in U.S. Patents 4,538,299 and 5,625,709) is used to analyze the images produced by the imaging system and to define local areas (patches) containing particles of interest. The boundary of each particle is identified and defined, and used to extract the picture data for each particle from the larger field, thereby producing digital patch images that each contain the image of an individual particle of interest (resulting in a significant compression of the data subsequently required for processing). Imaging system 2 and first processor 4 combine to perform the first step (collection of individual images) shown in Fig. 1.

Second processor 6 analyzes each particle image to determine the classification of the particle image. Second processor 6 performs the last four steps shown in Fig. 1, as described below.

### Boundary Enhancement - Mask Images

To enhance the particle feature extraction, the particle boundary is further refined, and black and white mask images of the particles are created. This process effectively changes all the digital image pixels outside the boundary of the particle (background pixels) to black pixels, and the pixels inside the particle boundary to white pixels. The resulting white images of the particles against a black background conveys the particles' shape and size very clearly, and are easy to operate on for particle features based on shape and size only (given that the pixels are either white or black).

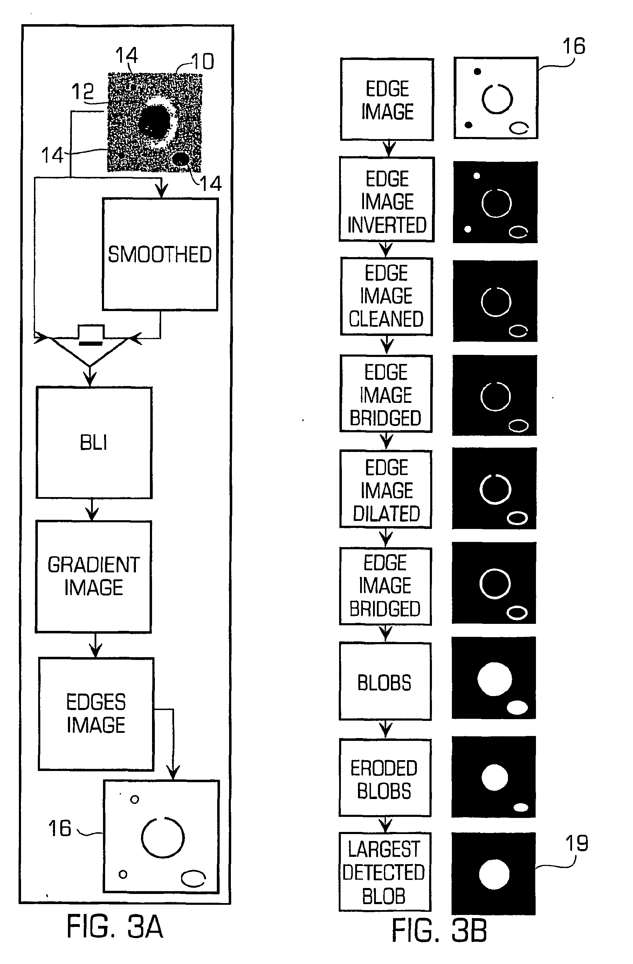

Figs. 3A-3B illustrate the basic steps for transforming the particle image into a mask image. First, a Shen-Castan edge detector (as described in Parker, James R., Algorithms for Image Processing and Computer Vision, ISBN 0-471-14056-2, John Wiley & Sons, 1997, pp 29-32, and incorporated herein by reference) is used to define the edges of particles of interest, as illustrated in Fig. 3A. A particle image 10 typically contains images of particles of interest 12 and other particles 14. The particle image 10 is smoothed, and a band limited Laplacian image is created, followed by a gradient image. A threshold routine is used to detect the edges, whereby the locations where the intensity crosses a predetermined threshold are defined as edges. The detected edges are connected together to result in an edges image 16, which contains lines that correspond to detected boundaries that outline the various particles.

A mask image is created from the edge image 16 in the manner illustrated in Fig. 3B. The edge image 16 is inverted so the boundary lines are white and the background is black. Then, the image is cleaned of all small specks and particles too small to be of interest. Small gaps in the boundary lines are filled to connect some of the boundary lines together. The boundary lines are dilated to increase their width. This dilation is on the outer edges of the boundary lines, since the inner edges define the actual size of the particles. Disconnected pixels are bridged to create complete lines that enclose the particles. The inside of the boundaries are filled in to create blobs that represent the particles. The blobs are eroded to remove the pixels that had formed the boundary lines, so that the blobs have the correct size. Finally, the largest blob is detected, and all the remaining blobs are discarded. The resulting image is a mask image of the particle, where the white blob against the black background accurately corresponds to the size and shape of the particle of interest.

### Particle Feature Extraction

Once the image of a particle of interest has been localized within a patch image, and its boundary further refined by creating a white mask image of the particle, the patch and mask images are further processed in order to extract particle features (feature data) from the particle image. Generally, the particle features numerically describe the size, shape, texture and color of the particles in numerous different ways that aid in the accurate classification of particle type. The particle features can be grouped in families that are related to one of these numerical descriptions, and can be extracted from the patch image, the mask image, or both.

The first family of particle features all relate to the shape of the particle, which aid in differentiating red and white blood cells which tend to be round, crystals which tend to be square or rectangular, and casts with tend to be elongated. The first family of particle features are:
1. Particle Area: the number of pixels contained within the particle boundary. Preferably, this particle feature is derived from the mask image of the particle.
2. Perimeter Length: the length of the particle boundary in pixels.
   Preferably, this is derived from the particle mask image by creating a 4-neighborhood perimeter image of the mask, and counting the number of non-zero pixels.
3. Shape Factor: an indication of the roundness of the particle. This is calculated as the square of the Perimeter Length, divided by the Particle Area.
4. Area to Perimeter Ratio: another indication of the roundness of the particle. This is calculated as the Particle Area divided by the Perimeter Length.

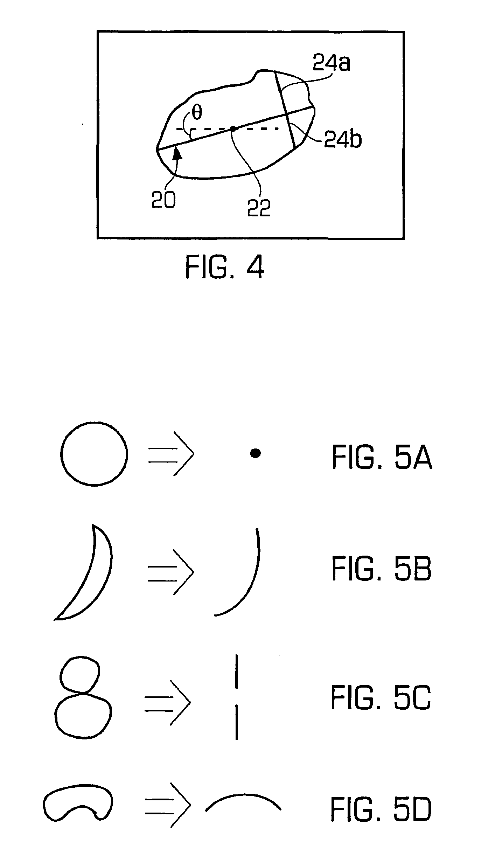

The second family of particle features relates to the symmetry of the particle, and in particular the determination of the number of lines of symmetry for any given shaped particle. This family of particle features are quite useful in distinguishing casts (typically having a line of symmetry along its long axis) and squamous epithelial cells (SQEPs, which generally have no line of symmetry). This family of particle features utilizes information derived from line segments applied at different angular orientations to the particle. As illustrated in Fig. 4, a line segment 20 is drawn through the centroid 22 of the mask image 19. For each point along the line segment 20, line segments 24a and 24b perpendicular thereto are drawn to extend away from the line segment 20 until they intersect the particle boundary, and the difference in length of the opposing perpendicular line segments 24a and 24b are calculated and stored. This calculation is repeated for each point along the line segment 20, where all the difference values are then summed and stored as a Symmetry Value for line segment 20. For a perfect circle, the Symmetry Value is zero for any line segment 20. The calculation of the Symmetry Value is then repeated for each angular rotation of line segment 20, resulting in a plurality of Symmetry Values, each one corresponding to a particular angular orientation of line segment 20. The Symmetry Values are then normalized by the Particle Area value, and sorted into an ordered list of Symmetry Values from low to high.

The second family of particle features are:
5. Minimum Symmetry: the lowest Symmetry Value in the ordered list, which represents the maximum symmetry exhibited by the particle at some value of rotation.
6. 20% Symmetry: the Symmetry Value that constitutes the 20^{th} percentile of the ordered list of Symmetry Values.
7. 50% Symmetry: the Symmetry Value that constitutes the 50^{th} percentile of the ordered list of Symmetry Values.
8. 80% Symmetry: the Symmetry Value that constitutes the 80^{th} percentile of the ordered list of Symmetry Values.
9. Maximum Symmetry: the highest Symmetry Value in the ordered list, which represents the minimum symmetry exhibited by the particle at some value of rotation.
10. Average Symmetry: the average value of the Symmetry Values.
11. Standard Deviation Symmetry: the standard deviation of the Symmetry Values.

The third family of particle features relate to skeletonization of the particle image, which produces one or more line segments that characterize both the size and the shape of the particle. These particle features are ideal in identifying analytes having multiple components in a cluster, such as budding yeast, hyphae yeast, and white blood cell clumps. These analytes will have skeletons with multiple branches, which are easy to differentiate from analytes having single branch skeletons. Creation of skeleton images is well known in the art of image processing, and is disclosed in Parker, James R., Algorithms for Image Processing and Computer Vision, ISBN 0-471-14056-2, John Wiley & Sons, 1997, pp 176-210), which is hereby incorporated herein by reference. Skeletonization essentially involves collapsing each portion of the particle boundary inwardly in a direction perpendicular to itself. For example, a perfect circle collapses to a single point; a crescent moon collapses to a curved line, a figure-8 collapses to 2 straight line segments, and a cell with an indentation collapses to a curved line, as illustrated in Figs. 5A - 5D respectively. The preferred embodiment utilizes two skeletonization algorithms: ZSH and BZS. ZSH is the Zhang-Suen thinning algorithm using Holt's variation plus staircase removal. BZS is the Zhang-Suen thinning algorithm using Holt's variation. Figure 5.11 in Parker (p. 182) shows the difference between results when these algorithms are applied, along with C-code for each algorithm.

The third family of particle features are:
12. ZSH Skeleton Size: the size of the skeleton, preferably determined by counting the number of pixels forming the skeleton. The Skeleton Size for a perfect circle is 1, and for a crescent moon would be the length of the curved line.
13. ZSH Normalized Skeleton Size: Skeleton Size normalized by the size of the particle, determined by dividing Skeleton Size by Particle Area.
14. BZS Skeleton Size: the size of the skeleton, preferably determined by counting the number of pixels forming the skeleton. The Skeleton Size for a perfect circle is 1, and for a crescent moon would be the length of the curved line.
15. BZS Normalized Skeleton Size: Skeleton Size normalized by the size of the particle, determined by dividing Skeleton Size by Particle Area.

The fourth family of particle features relate to measuring the shape of the particle using radial lengths of radii that fit in the particle, and the quantile rankings of these values. Specifically, a centroid is defined inside the particle, preferably using the mask image, and a plurality of radii emanating from the centroid at different angles extend out to the particle boundary. The lengths of the radii are collected into a list of Radii Values, and the list is sorted from low to high values. A certain % quantile of an ordered list of values represents the value having a position in the list that corresponds to the certain percentage from the bottom of the list. For example, a 30% quantile of a list is the value that is positioned 30% up from bottom of the list, with 70% of the values being above it in the list. So, in an order list of 10 values, the 30% quantile value is the seventh value from the top of the list, and the 50% quantile is the median value of the list.

The fourth family of particle features are:
16. 25% Radii Value: the value corresponding to the 25% quantile of the list of Radii Values.
17. 50% Radii Value: the value corresponding to the 50% quantile of the list of Radii Values.
18. 75% Radii Value: the value corresponding to the 75% quantile of the list of Radii Values.
19. Smallest Mean Ratio: the ratio of the smallest Radii Value to the mean Radii Value.
20. Largest Mean Ratio: the ratio of the largest Radii Value to the mean Radii Value.
21. Average Radii Value: the average of the Radii Values.
22. Standard Deviation Radii Value: the standard deviation of the Radii Values.

The fifth family of particle features measures the intensity of the particle image. Light absorption properties of different analytes differ significantly. For example, crystals are generally refractive and may actually "concentrate" light so that their interior may be brighter than the background. Stained white blood cells, however, will typically be substantially darker than the background. The average intensity reveals the overall light absorbing quality of the particle, while the standard deviation of intensity measures the uniformity of the particle's absorbing quality. In order to measure intensity, the particle is preferably isolated by using the mask image in order to mask the patch image of the particle. Thus, the only pixels left (inside the mask) are those pixels contained inside the particle boundary. This family of particle features includes:
23. Average Pixel Value: the average pixel value for all the pixels inside the particle boundary.
24. Standard Deviation of Pixel Values: the standard deviation of pixel values for pixels inside the particle boundary.

The sixth family of particle features use the Fourier Transform of the particle to measure the radial distribution of the particle. The Fourier Transform depends on the size, shape and texture (i.e. fine grain structure) of the particle. In addition to adding texture, the Fourier Transform magnitude is independent of the position of the particle, and particle rotation is directly reflected as a rotation of the transform. Finding clusters of energy at one rotation is an indication of linear aspects of the particle (i.e. the particle has linear portions). This finding helps discriminate between particles such as crystals versus red blood cells. The Fourier Transform of the patch image of the particle is preferably calculated using a well known Fast Fourier Transform (FFT) algorithm with a window of 128x128 pixels. The following particle features are then calculated:
25. FFT Average Intensity of Rotated 128 Pixel Line: a queue listing of average pixel values along a 128 pixel line as a function of rotation angle. This is calculated by placing a radial line of length 128 pixels over the transform, and rotating the radial line through an arc of 180 degrees by increments ofN degrees. For each increment ofN degrees, the average of the pixel values along the radial line is calculated. The average pixel values for the N degree increments are stored in a queue as Average Intensity along with the corresponding angular increment.
26. FFT Maximum/Minimum 128 Pixel Angular Difference: the difference between the angular values that correspond to the highest and lowest Average Intensity values stored in the queue.
27. FFT 128 Pixel Average Intensity Standard Deviation: the standard deviation of the Average Intensity values stored in the queue.
28. FFT Average Intensity of Rotated 64 Pixel Line: same as the FFT Average Intensity of Rotated 128 Pixel Line, but instead using a 64 pixel length radial line.
29. FFT Maximum/Minimum 64 Pixel Angular Difference: same as the FFT Maximum/Minimum 128 Pixel Angular Difference, but instead using a 64 pixel length radial line.
30. FFT 64 Pixel Average Intensity Standard Deviation: same as the FFT 128 Pixel Average Intensity Standard Deviation, but instead using a 64 pixel length radial line.
31. FFT Average Intensity of Rotated 32 Pixel Line: same as the FFT Average Intensity of Rotated 128 Pixel Line, but instead using a 32 pixel length radial line.
32. FFT Maximum/Minimum 32 Pixel Angular Difference: same as the FFT Maximum/Minimum 128 Pixel Angular Difference, but instead using a 32 pixel length radial line.
33. FFT 32 Pixel Average Intensity Standard Deviation: same as the FFT 128 Pixel Average Intensity Standard Deviation, but instead using a 32 pixel length radial line.

Additional FFT particle features all related to standard deviation values based upon a rotated radial line of varying lengths are as follows:
34. FFT 128 Pixel Average Intensity Standard Deviation Sort: a sorted queue listing of the standard deviation of average pixel values along a 128 pixel line for different rotations. This is calculated by placing a radial line of length 128 pixels over the transform, and rotating the radial line through an arc of 180 degrees by increments of N degrees. For each increment of N degrees, the standard deviation value of the pixels on the line is calculated. The standard deviation values for all the N degree increments are sorted from low to high, and stored in a queue.
35. FFT 128 Pixel Minimum Radial Standard Deviation: the minimum radial standard deviation value retrieved from the sorted queue listing of standard deviation values.
36. FFT 128 Pixel Maximum Radial Standard Deviation: the maximum radial standard deviation value retrieved from the sorted queue listing of standard deviation values.
37. FFT 128 Pixel 25% Quantile Radial Standard Deviation: the radial standard deviation value from the queue corresponding to the 25% quantile of the values stored in the queue.
38. FFT 128 Pixel 50% Quantile Radial Standard Deviation: the radial standard deviation value from the queue corresponding to the 50% quantile of the values stored in the queue.
39. FFT 128 Pixel 75% Quantile Radial Standard Deviation: the radial standard deviation value from the queue corresponding to the 75% quantile of the values stored in the queue.
40. FFT 128 Pixel Minimum to Average Radial Standard Deviation Ratio: the ratio of the minimum to average radial standard deviation values stored in the queue.
41. FFT 128 Pixel Maximum to Average Radial Standard Deviation Ratio: the ratio of the maximum to average radial standard deviation values stored in the queue.
42. FFT 128 Pixel Average Radial Standard Deviation: the average radial standard deviation value of the values stored in the queue.
43. FFT 128 Pixel Standard Deviation of the Radial Standard Deviation: the standard deviation of all of the radial standard deviation values stored in the queue.
44. FFT 64 Pixel Average Intensity Standard Deviation Sort: the same as the FFT 128 Pixel Average Intensity Standard Deviation Sort, but instead using a 64 pixel length radial line.
45. FFT 64 Pixel Minimum Radial Standard Deviation: the same as the FFT 128 Pixel Minimum Radial Standard Deviation, but instead using a 64 pixel length radial line.
46. FFT 64 Pixel Maximum Radial Standard Deviation: the same as the FFT 128 Pixel Maximum Radial Standard Deviation, but instead using a 64 pixel length radial line.
47. FFT 64 Pixel 25% Quantile Radial Standard Deviation: the same as the FFT 128 Pixel 25% Quantile Radial Standard Deviation, but instead using a 64 pixel length radial line.
48. FFT 64 Pixel 50% Quantile Radial Standard Deviation: the same as the FFT 128 Pixel 50% Quantile Radial Standard Deviation, but instead using a 64 pixel length radial line.
49. FFT 64 Pixel 75% Quantile Radial Standard Deviation: the same as the FFT 128 Pixel 75% Quantile Radial Standard Deviation, but instead using a 64 pixel length radial line.
50. FFT 64 Pixel Minimum to Average Radial Standard Deviation Ratio: the same as the FFT 128 Pixel Minimum to Average Radial Standard Deviation Ratio, but instead using a 64 pixel length radial line.
51. FFT 64 Pixel Maximum to Average Radial Standard Deviation Ratio: the same as the FFT 128 Pixel Maximum to Average Radial Standard Deviation Ratio, but instead using a 64 pixel length radial line.
52. FFT 64 Pixel Average Radial Standard Deviation: the same as the FFT 128 Pixel Average Radial Standard Deviation, but instead using a 64 pixel length radial line.
53. FFT 64 Pixel Standard Deviation of the Radial Standard Deviation: the same as the FFT 128 Pixel Standard Deviation of the Radial Standard Deviation, but instead using a 64 pixel length radial line.
54. FFT 32 Pixel Average Intensity Standard Deviation Sort: the same as the FFT 128 Pixel Average Intensity Standard Deviation Sort, but instead using a 32 pixel length radial line.
55. FFT 32 Pixel Minimum Radial Standard Deviation: the same as the FFT 128 Pixel Minimum Radial Standard Deviation, but instead using a 32 pixel length radial line.
56. FFT 32 Pixel Maximum Radial Standard Deviation: the same as the FFT 128 Pixel Maximum Radial Standard Deviation, but instead using a 32 pixel length radial line.
57. FFT 32 Pixel 25% Quantile Radial Standard Deviation: the same as the FFT 128 Pixel 25% Quantile Radial Standard Deviation, but instead using a 32 pixel length radial line.
58. FFT 32 Pixel 50% Quantile Radial Standard Deviation: the same as the FFT 128 Pixel 50% Quantile Radial Standard Deviation, but instead using a 32 pixel length radial line.
59. FFT 32 Pixel 75% Quantile Radial Standard Deviation: the same as the FFT 128 Pixel 75% Quantile Radial Standard Deviation, but instead using a 32 pixel length radial line.
60. FFT 32 Pixel Minimum to Average Radial Standard Deviation Ratio: the same as the FFT 128 Pixel Minimum to Average Radial Standard Deviation Ratio, but instead using a 32 pixel length radial line.
61. FFT 32 Pixel Maximum to Average Radial Standard Deviation Ratio: the same as the FFT 128 Pixel Maximum to Average Radial Standard Deviation Ratio, but instead using a 32 pixel length radial line.
62. FFT 32 Pixel Average Radial Standard Deviation: the same as the FFT 128 Pixel Average Radial Standard Deviation, but instead using a 32 pixel length radial line.
63. FFT 32 Pixel Standard Deviation of the Radial Standard Deviation: the same as the FFT 128 Pixel Standard Deviation of the Radial Standard Deviation, but instead using a 32 pixel length radial line.

Even more FFT particle features are used, all related to average values based upon a rotated radial line of varying lengths:
64. FFT 128 Pixel Average Intensity Sort: a sorted queue listing of the average pixel values along a 128 pixel line for different rotations. This is calculated by placing a radial line of length 128 pixels over the transform, and rotating the radial line through an arc of 180 degrees by increments of N degrees. For each increment of N degrees, the average value of the pixels on the line is calculated. The average pixel values for all the N degree increments are sorted from low to high, and stored in a queue.
65. FFT 128 Pixel Minimum Average Value: the minimum radial average value retrieved from the sorted queue listing of average values.
66. FFT 128 Pixel Maximum Radial Value: the maximum radial average value retrieved from the sorted queue listing of average values.
67. FFT 128 Pixel 25% Quantile Radial Average Value: the radial average value from the queue corresponding to the 25% quantile of the average values stored in the queue.
68. FFT 128 Pixel 50% Quantile Radial Average Value: the radial average value from the queue corresponding to the 50% quantile of the average values stored in the queue.
69. FFT 128 Pixel 75% Quantile Radial Average Value: the radial average value from the queue corresponding to the 75% quantile of the average values stored in the queue.
70. FFT 128 Pixel Minimum to Average Radial Average Value Ratio: the ratio of the minimum to average radial average values stored in the queue.
71. FFT 128 Pixel Maximum to Average Radial Average Value Ratio: the ratio of the maximum to average radial average values stored in the queue.
72. FFT 128 Pixel Average Radial Standard Deviation: the average radial standard deviation value of the average values stored in the queue.
73. FFT 128 Pixel Standard Deviation of the Average Values: the standard deviation of all of the radial average values stored in the queue.

The seventh family of particle features use grayscale and color histogram quantiles of image intensities, which provide additional information about the intensity variation within the particle boundary. Specifically, grayscale, red, green and blue histogram quantiles provide intensity characterization in different spectral bands. Further, stains used with particle analysis cause some particles to absorb certain colors, such as green, while others exhibit refractive qualities at certain wavelengths. Thus, using all these particle features allows one to discriminate between a stained particle such as white blood cells that absorb the green, and crystals that refract yellow light.

Histograms, cumulative histograms and quantile calculations are disclosed in U.S. Patent 5,343,538, which is hereby incorporated herein by reference. The particle image is typically captured using a CCD camera that breaks down the image into three color components. The preferred embodiment uses an RGB camera that separately captures the red, green and blue components of the particle image. The following particle features are calculated based upon the grayscale, red, green and blue components of the image:
74. Grayscale Pixel Intensities: a sorted queue listing of the grayscale pixel intensities inside the particle boundary. The grayscale value is a summation of the three color components. For each pixel inside the particle boundary (as masked by the mask image), the grayscale pixel value is added to a grayscale queue, which is then sorted (e.g. from low to high).
75. Minimum Grayscale Image Intensity: the minimum grayscale pixel value stored in the queue.
76. 25% Grayscale Intensity: the value corresponding to the 25% quantile of the grayscale pixel values stored in the queue.
77. 50% Grayscale Intensity: the value corresponding to the 50% quantile of the grayscale pixel values stored in the queue.
78. 75% Grayscale Intensity: the value corresponding to the 75% quantile of the grayscale pixel values stored in the queue.
79. Maximum Grayscale Image Intensity: the maximum grayscale pixel value stored in the queue.
80. Red Pixel Intensities: a sorted queue listing of the red pixel intensities inside the particle boundary. The particle image is converted so that only the red component of each pixel value remains. For each pixel inside the particle boundary (as masked by the mask image), the red pixel value is added to a red queue, which is then sorted from low to high.
81. Minimum Red Image Intensity: the minimum red pixel value stored in the queue.
82. 25% Red Intensity: the value corresponding to the 25% quantile of the red pixel values stored in the queue.
83. 50% Red Intensity: the value corresponding to the 50% quantile of the red pixel values stored in the queue.
84. 75% Red Intensity: the value corresponding to the 75% quantile of the red pixel values stored in the queue.
85. Maximum Red Image Intensity: the maximum red pixel value stored in the queue.
86. Green Pixel Intensities: a sorted queue listing of the green pixel intensities inside the particle boundary. The particle image is converted so that only the green component of the pixel value remains. For each pixel inside the particle boundary (as masked by the mask image), the green pixel value is added to a green queue, which is then sorted from low to high.
87. Minimum Green Image Intensity: the minimum green pixel value stored in the queue.
88. 25% Green Intensity: the value corresponding to the 25% quantile of the green pixel values stored in the queue.
89. 50% Green Intensity: the value corresponding to the 50% quantile of the green pixel values stored in the queue.
90. 75% Green Intensity: the value corresponding to the 75% quantile of the green pixel values stored in the queue.
91. Maximum Green Image Intensity: the maximum green pixel value stored in the queue.
92. Blue Pixel Intensities: a sorted queue listing of the blue pixel intensities inside the particle boundary. The particle image is converted so that only the blue component of the pixel value remains. For each pixel inside the particle boundary (as masked by the mask image), the blue pixel value is added to a blue queue, which is then sorted from low to high.
93. Minimum Blue Image Intensity: the minimum blue pixel value stored in the queue.
94. 25% Blue Intensity: the value corresponding to the 25% quantile of the blue pixel values stored in the queue.
95. 50% Blue Intensity: the value corresponding to the 50% quantile of the blue pixel values stored in the queue.
96. 75% Blue Intensity: the value corresponding to the 75% quantile of the blue pixel values stored in the queue.
97. Maximum Blue Image Intensity: the maximum blue pixel value stored in the queue.

The eighth family of particle features use concentric circles and annuli to further characterize the variation in the FFT magnitude distribution, which is affected by the size, shape and texture of the original analyte image. A center circle is defined over a centroid of the FFT, along with seven annuli (in the shape of a washer) of progressively increasing diameters outside of and concentric with the center circle. The first annulus has an inner diameter equal to the outer diameter of the center circle, and an outer diameter that is equal to the inner diameter of the second annulus, and so on. The following particle features are calculated from the center circle and seven annuli over the FFT:
98. Center Circle Mean Value: the mean value of the magnitude of the FFT inside the center circle.
99. Center Circle Standard Deviation: the standard deviation of the magnitude of the FFT inside the center circle.
100. Annulus to Center Circle Mean Value: the ratio of the mean value of the magnitude of the FFT inside the first annulus to that in the center circle.
101. Annulus to Center Circle Standard Deviation: the ratio of the standard deviation of the magnitude of the FFT inside the first annulus to that in the center circle.
102. Annulus to Circle Mean Value: the ratio of the mean value of the magnitude of the FFT inside the first annulus to that of a circle defined by the outer diameter of the annulus.
103. Annulus to Circle Standard Deviation: the ratio of the standard deviation of the magnitude of the FFT inside the first annulus to that of a circle defined by the outer diameter of the annulus.
104. Annulus to Annulus Mean Value: the ratio of the mean value of the magnitude of the FFT inside the first annulus to that of the annulus or center circle having the next smaller diameter (in the case of the first annulus, it would be the center circle).
105. Annulus to Annulus Standard Deviation: the ratio of the standard deviation of the magnitude of the FFT inside the first annulus to that of the annulus or center circle having the next smaller diameter (in the case of the first annulus, it would be the center circle).
106-111: Same as features 100-104, except the second annulus is used instead of the first annulus.
112-117: Same as features 100-104, except the third annulus is used instead of the first annulus.
118-123: Same as features 100-104, except the fourth annulus is used instead of the first annulus.
124-129: Same as features 100-104, except the fifth annulus is used instead of the first annulus.
130-135: Same as features 100-104, except the sixth annulus is used instead of the first annulus.
136-141: Same as features 100-104, except the seventh annulus is used instead of the first annulus.
154-197 is the same as 98-141, except they are applied to an FFT of the FFT of the particle image.

The last family of particle features use concentric squares with sides equal to 11%, 22%, 33%, 44%, 55%, and 66% of the FFT window size (e.g. 128) to further characterize the variation in the FFT magnitude distribution, which is affected by the size, shape and texture of the original analyte image. There are two well known texture analysis algorithms that characterize the texture of an FFT. The first is entitled Vector Dispersion, which involves fitting a planar to teach regions using normals, and is described on pages 165-168 of Parker, which is incorporated by reference. The second is entitled Surface Curvature Metric, which involves conforming a polynomial to the region, and is described on pages 168-171 of Parker, which is incorporated by reference. The following particle features are calculated from different sized windows over the FFT:
142-147: Application of the Vector Dispersion algorithm to the 11%, 22%, 33%, 44%, 55%, and 66% FFT windows, respectively.
148-153: Application of the Surface Curvature Metric algorithm to the 11%, 22%, 33%, 44%, 55%, and 66% FFT windows, respectively.

### Processing and Decision Making

Once the foregoing particle features are computed, processing rules are applied to determine the classification of certain particles or how all of the particles in the ensemble from the sample will be treated. The preferred embodiment acquires the particle images using a low power objective lens (e.g. 10X) to perform low power field (LPF) scans with a larger field of view to capture larger particles, and a high power objective lens (e.g. 40X) to perform high power field (HPF) scans with greater sensitivity to capture the more minute details of smaller particles.

The system of the present invention utilizes separate multi neural net decision structures to classify particles captured in the LPF scan and HPF scan. Since most particles of interest will appear in one of the LPF or HPF scans, but not both, the separate decision structures minimize the number of particles of interest that each structure must classify.

### Neural Net Structure

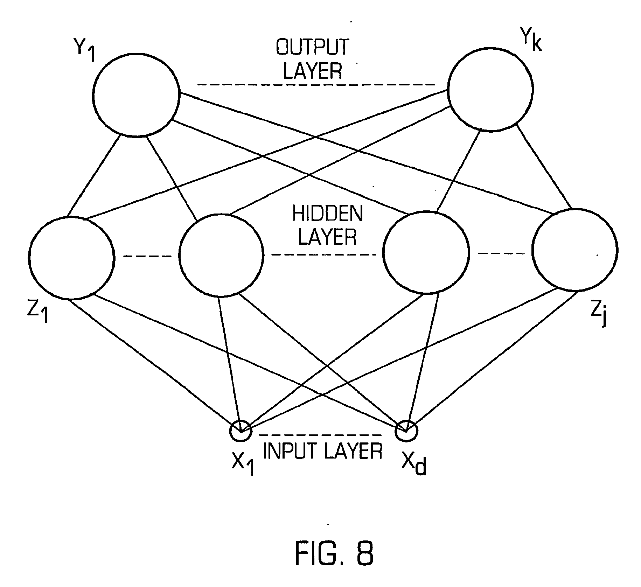

Figure 8 illustrates the basic neural net structure used for all the neural nets in the LPF and HPF scans. The net includes an input layer with inputs X₁ to X_{d}, each corresponding to one of the particle features described above that are selected for use with the net. Each input is connected to each one of a plurality of neurons Z₁ to Z_{J} in a hidden layer. Each of these hidden layer neurons Z₁ to Z_{J} sums all the values received from the input layer in a weighted fashion, whereby the actual weight for each neuron is individually assignable. Each hidden layer neuron Z₁ to Z_{J} also applies a non-linear function to the weighted sum. The output from each hidden layer neuron Z₁ to Z_{J} is supplied each one of a second (output) layer of neurons Y₁ to Y_{K}. Each of the output layer neurons Y₁ to Y_{K} also sums the inputs received from the hidden layer in a weighted fashion, and applies a non-linear function to the weighted sum. The output layer neurons provide the output of the net, and therefore the number of these output neurons corresponds to the number of decision classes that the net produces. The number of inputs equals the number of particle features that are chosen for input into the net.

As described later, each net is 'trained' to produce an accurate result. For each decision to be made, only those particle features that are appropriate to the decision of the net are selected for input into the net. The training procedure involves modifying the various weights for the neurons until a satisfactory result is achieved from the net as a whole. In the preferred embodiment, the various nets were trained using NeuralWorks, product version 5.30, which is produced by NeuralWare of Carnegie, Pa, and in particular the Extended Delta Bar Delta Back-propagation algorithm. The non-linear function used for all the neurons in all of the nets in the preferred embodiment is the hyperbolic tangent function, where the input range is constrained between -0.8 and +0.8 to avoid the low slope region.

### LPF Scan Process

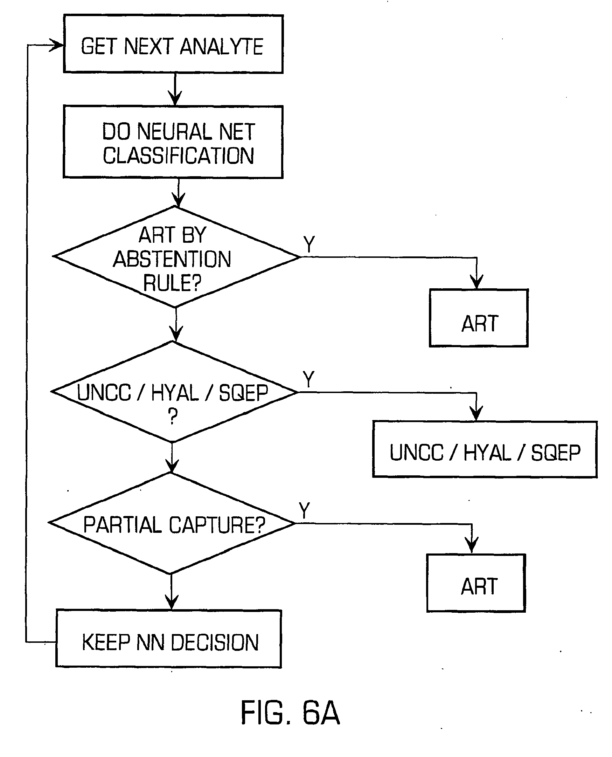

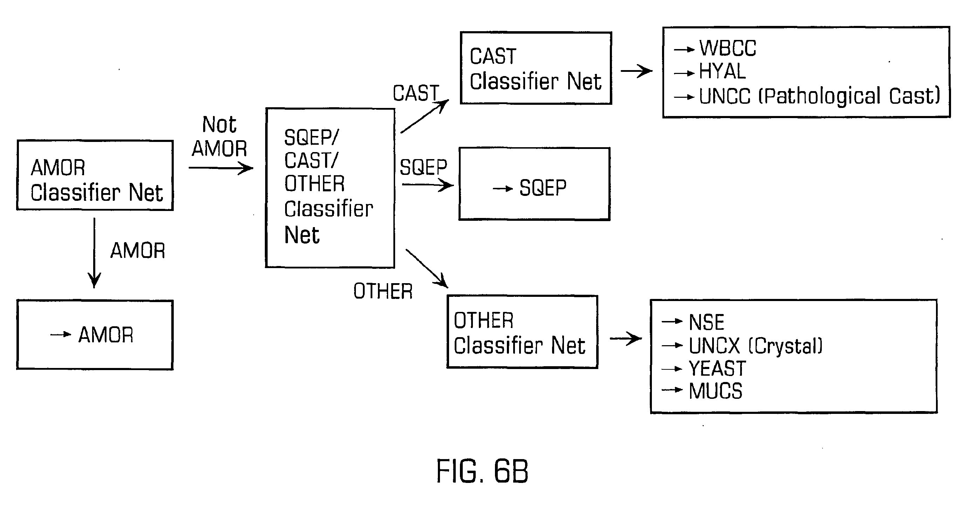

The LPF scan process is illustrated in Fig. 6A, and starts by getting the next particle image (analyte) using the low power objective lens. A neural net classification is then performed, which involves the process of applying a cascading structure of neural nets to the analyte image, as illustrated in Fig. 6B. Each neural net takes a selected subgroup of the calculated 198 particle features discussed above, and calculates a classification probability factor ranging from zero to one that the particle meets the criteria of the net. The cascading configuration of the nets helps improve the accuracy of each neural net result downstream, because each net can be specifically designed for more accuracy given that the particle types it operates on have been prescreened to have or not have certain characteristics. For system efficiency, all 198 particle features are preferably calculated for each particle image, and then the neural net classification process of Fig. 6B is applied.

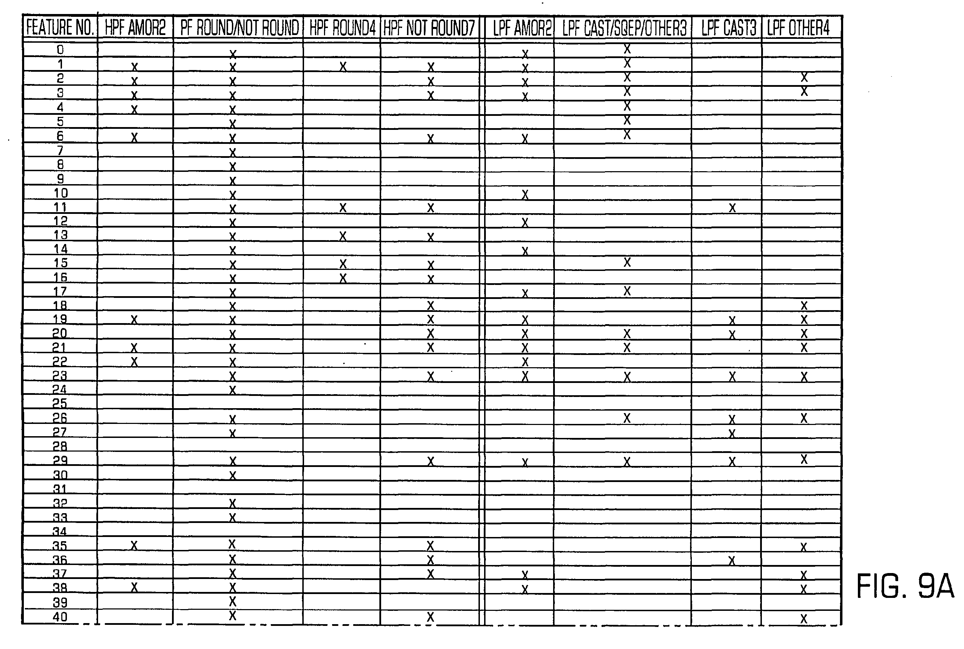

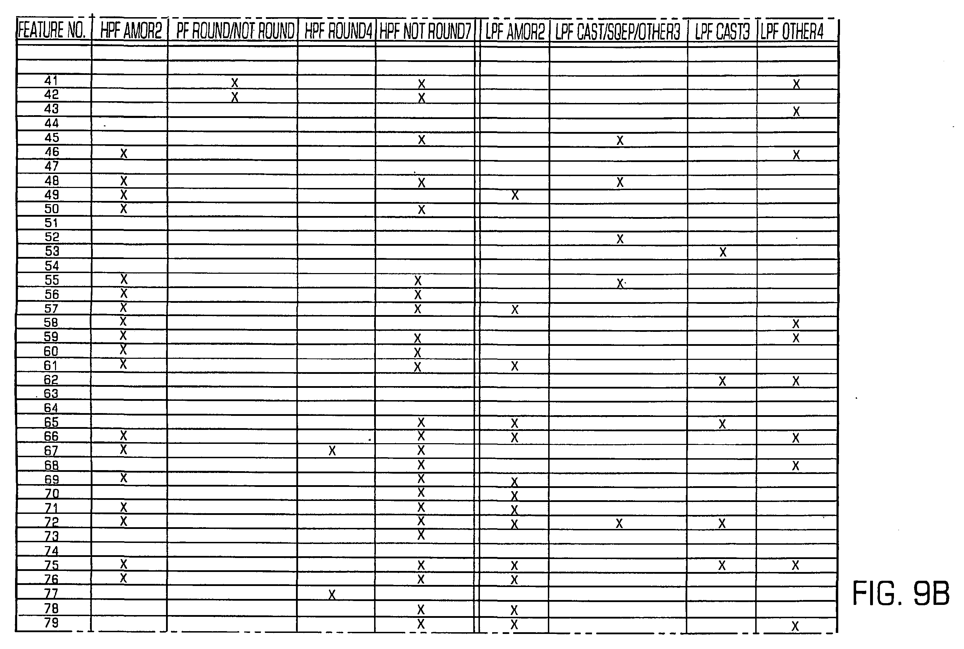

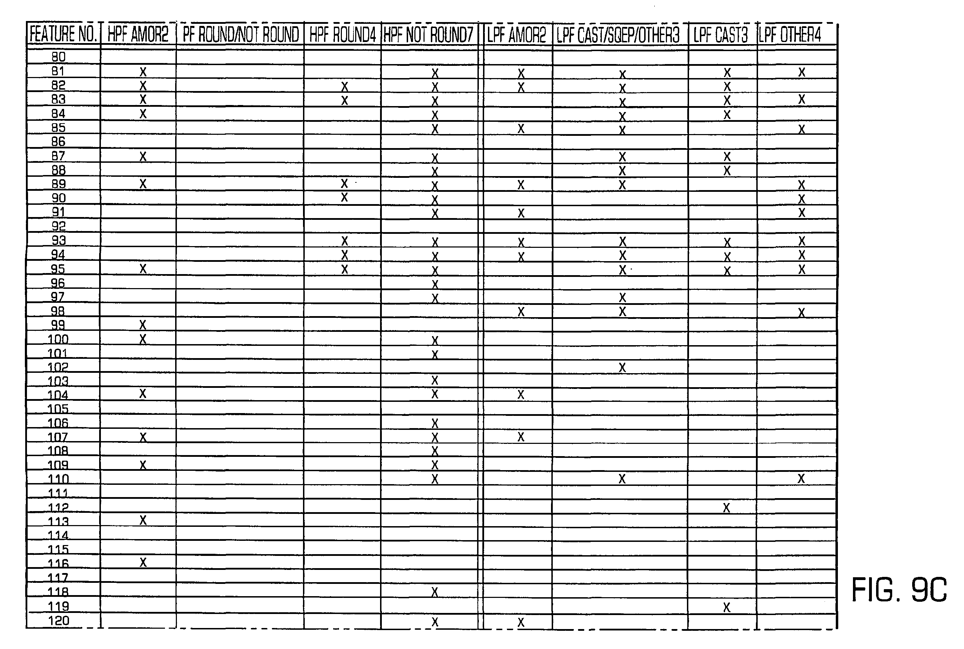

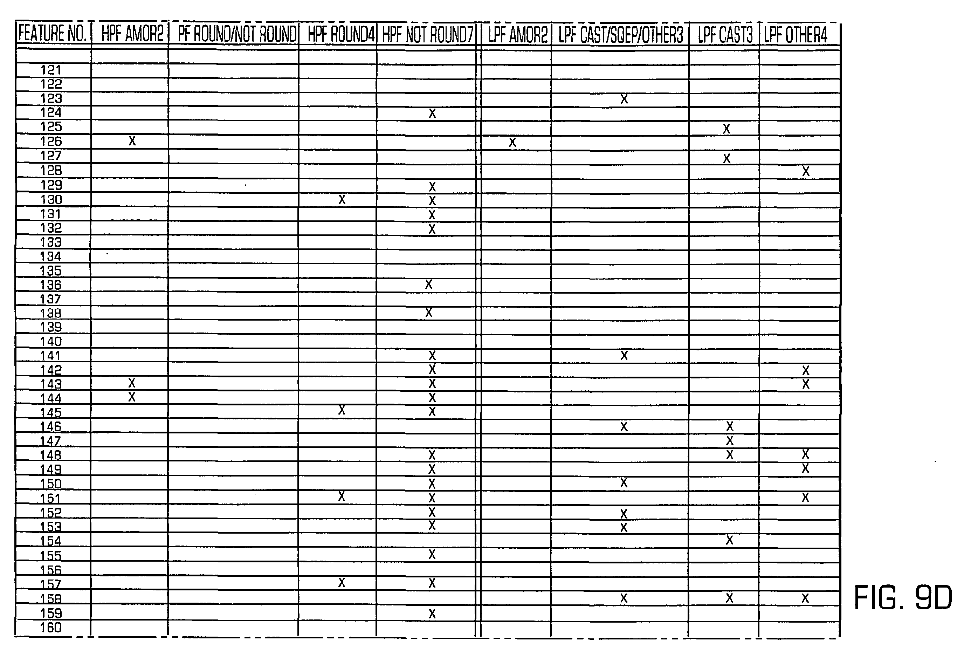

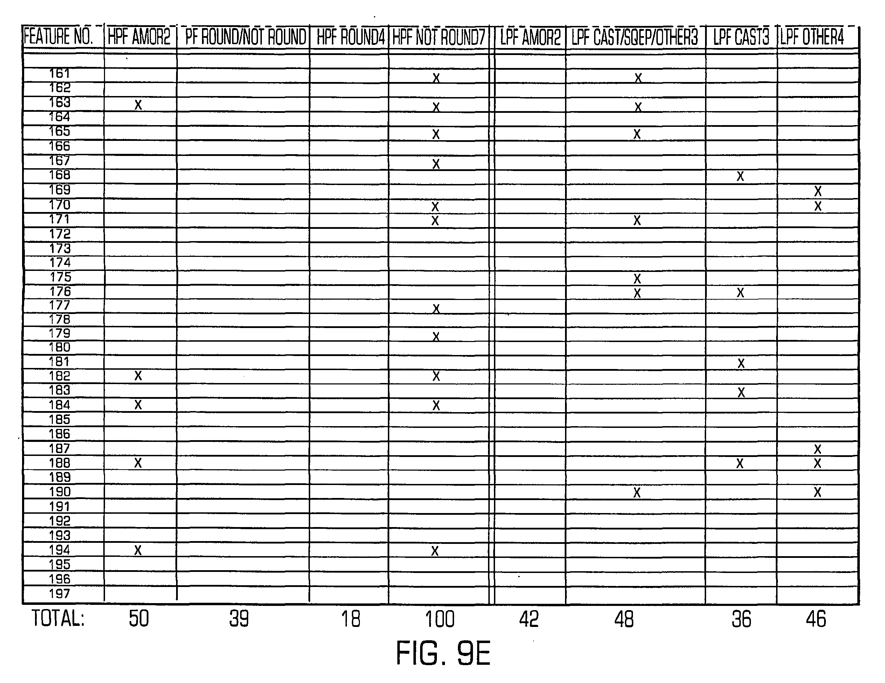

The first neural net applied to the particle image is the AMOR Classifier Net, which decides whether or not the particle is amorphous. For the preferred embodiment, this net includes 42 inputs for a selected subset of the 198 particle features described above, 20 neurons in the hidden layer, and two neurons in the output layer. The column entitled LPF AMOR2 in the table of Figs. 9A-9C shows the numbers of the 42 particle features described above that were selected for use with this net. The first and second outputs of this net correspond to the probabilities that the particle is or is not amorphous, respectively. Whichever probability is higher constitutes the decision of the net. If the net decides the particle is amorphous, then the analysis of the particle ends.

If it is decided that the particle is not amorphous, then the SQEP/CAST/OTHER Classifier Net is applied, which decides whether the particle is a Squamous Epithelial cell (SQEP), a Cast cell (CAST), or another type of cell. For the preferred embodiment, this net includes 48 inputs for a selected subset of the 198 particle features described above, 20 neurons in the hidden layer, and three neurons in the output layer. The column entitled LPF CAST/SQEP/OTHER3 in the table of Figs. 9A-9C shows the numbers of the 48 particle features described above that were selected for use with this net. The first, second and third outputs of this net correspond to the probabilities that the particle a Cast, a SQEP, or another particle type, respectively. Whichever probability is highest constitutes the decision of the net.

If it is decided that the particle is a Cast cell, then the CAST Classifier Net is applied, which decides whether the particle is a White Blood Cell Clump (WBCC), a Hyaline Cast Cell (HYAL), or an unclassified cast (UNCC) such as a pathological cast cell. For the preferred embodiment, this net includes 36 inputs for a selected subset of the 198 particle features described above, 10 neurons in the hidden layer, and three neurons in the output layer. The column entitled LPF CAST3 in the table of Figs. 9A-9C shows the numbers of the 36 particle features described above that were selected for use with this net. The first, second and third outputs of this net correspond to the probabilities that the particle is a WBCC, HYAL or UNCC. Whichever probability is highest constitutes the decision of the net.

If it is decided that the particle is a Squamous Epithelial cell, then the decision is left alone.

If it is decided that the particle is another type of cell, then the OTHER Classifier Net is applied, which decides whether the particle is a Non-Squamous Epithelial cell (NSE) such as a Renal Epithelial cell or a transitional Epithelial cell, an Unclassified Crystal (UNCX), Yeast (YEAST), or Mucus (MUCS). For the preferred embodiment, this net includes 46 inputs for a selected subset of the 198 particle features described above, 20 neurons in the hidden layer, and four neurons in the output layer. The column entitled LPF OTHER4 in the table of Figs. 9A-9C shows the numbers of the 46 particle features described above that were selected for use with this net. The first, second, third and fourth outputs of this net correspond to the probabilities that the particle is a NSE, UNCX, YEAST, or MUCS. Whichever probability is highest constitutes the decision of the net.

Referring back to Fig. 6A, once the Neural Net Classification has decided the particle type, an ART by Abstention Rule is applied, to determine if the particle should be classified as an artifact because none of the nets gave a high enough classification probability factor to warrant a particle classification. The ART by Abstention Rule applied by the preferred embodiment is as follows: if the final classification by the net structure is HYAL, and the CAST probability was less than 0.98 at the SQEP/CAST/Other net, then the particle is reclassified as an artifact. Also, if the final classification by the net structure was a UNCC, and the CAST probability was less then 0.95 at the SQEP/CAST/Other net, then the particle is reclassified as an artifact.

The next step shown in Fig. 6A applies to particles surviving the ART by Abstention Rule. If the particle was classified by the net structure as a UNCC, a HYAL or a SQEP, then that classification is accepted unconditionally. If the particle was classified as another type of particle, then a partial capture test is applied to determine if the particle should be classified as an artifact. Partial capture test determines if the particle boundary hits one or more particle image patch boundaries, and thus only part of the particle image was captured by the patch image. The partial capture test of the preferred embodiment basically looks at the pixels forming the boundary of the patch to ensure they represent background pixels. This is done by collecting a cumulative intensity histogram on the patch boundaries, and calculating Lower and Upper limits of these intensities. The Lower limit in the preferred embodiment is either the third value from the bottom of the histogram, or the value 2% from the bottom of the histogram, whichever is greater. The Upper limit is either the third value from the top of the histogram, or the value 2% from the top of the histogram, whichever is greater. The patch image is deemed a partial capture if the lower limit is less than 185 (e.g. of a pixel intensity that ranges from 0 to 255). The patch is also deemed a partial capture if the upper limit is less than or equal to 250 and the lower limit is less than 200 (this is to take care of the case where the halo of a particle image touches the patch image boundary). All particles surviving the partial capture test maintain their classification, and the LPF scan process is complete.

In the preferred embodiment, the partial capture test is also used as one of the particle features used by some of the neural nets. The feature value is 1 if the particle boundary is found to hit one or more particle image patch boundaries, and a zero if not. This particle feature is numbered "0" in Figs. 9A-9C.

### HPF Scan Process

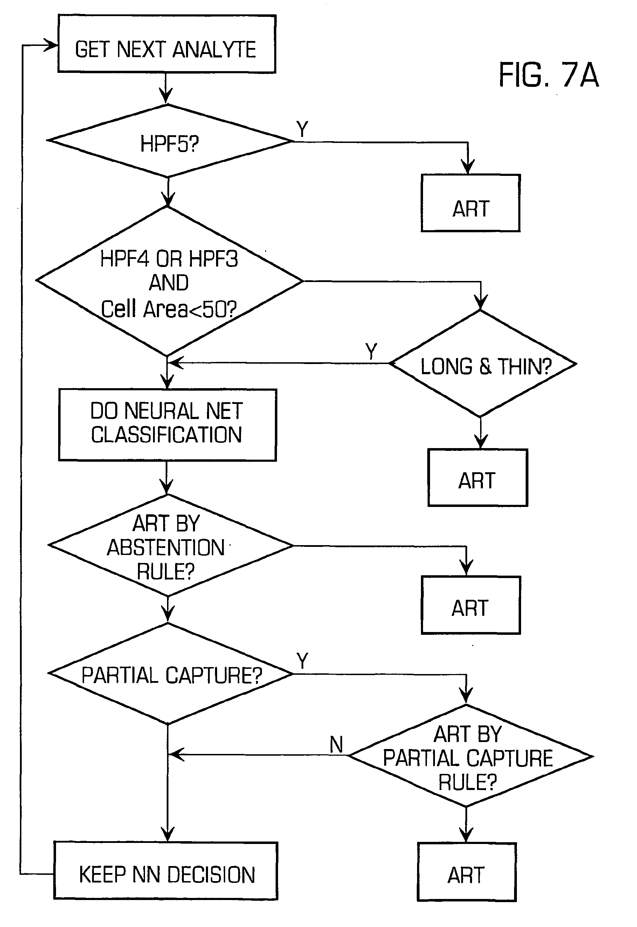

The HPF scan process is illustrated in Fig. 7A, and starts by getting the next particle image (analyte) using the high power objective lens. Two pre-processing artifact classification steps are performed before submitting the particles to neural net classification. The first preprocessing step begins by defining five size boxes (HPF1-HPF5), with each of the particles being associated with the smallest box that it can completely fit in to. In the preferred embodiment, the smallest box HPF5 is 12 by 12 pixels, and the largest box HPF1 is 50 by 50 pixels. All particles associated with the HPF5 box are classified as an artifact and removed from further consideration, because those particles are too small for accurate classification given the resolution of the system.

The second pre-processing step finds all remaining particles that are associated with the HPF3 or HPF4 boxes, that have a cell area that is less than 50 square pixels, and that are not long and thin, and classifies them as artifacts. This second preprocessing step combines size and aspect ratio criteria, which eliminates those smaller particles which tend to be round. Once particles associated with the HPF3 or HPF4 boxes and with a cell area under 50 square pixels have been segregated, each such particle is classified as an artifact if either of the following two criteria are met. First, if the square of the particle perimeter divided by the particle area is less than 20, then the particle is not long and thin and is classified an artifact. Second, if the ratio of eigenvalues of the covariance matrix of X and Y moments (which is also called the Stretch Value) is less than 20, then the particle is not long and thin and is classified an artifact.

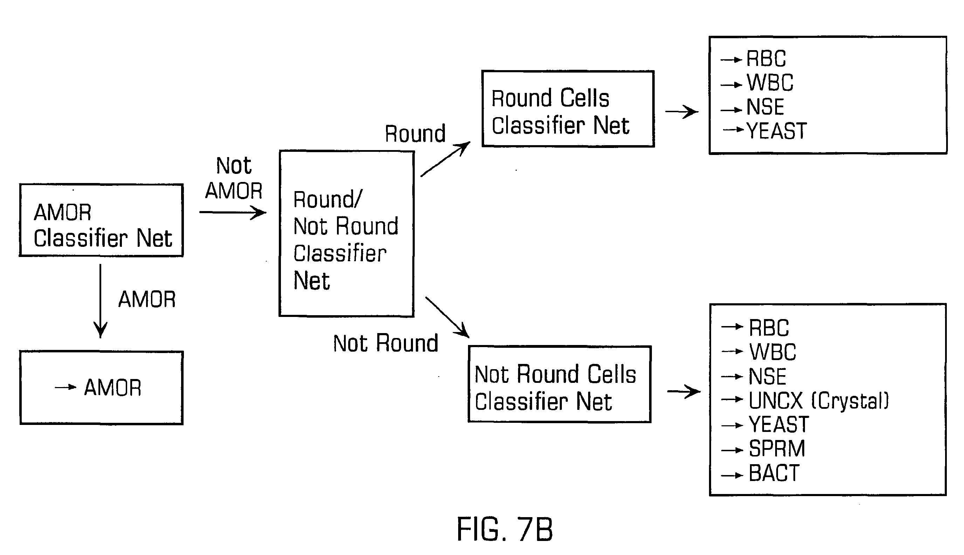

Particle images that survive the two preprocessing steps described above are subjected to the cascading structure of neural nets illustrated in Fig. 7B. Each neural net takes a selected subgroup of the calculated 198 particle features discussed above, and calculates a classification probability factor ranging from zero to one that the particle meets the criteria of net. As with the cascading configuration of the nets, this helps improve the accuracy of each neural net result downstream, and preferably all 198 particle features are calculated for each particle image before the HPF scan commences.

The first neural net applied to the particle image is the AMOR Classifier Net, which decides whether or not the particle is amorphous. For the preferred embodiment, this net includes 50 inputs for a selected subset of the 198 particle features described above, 10 neurons in the hidden layer, and two neurons in the output layer. The column entitled HPF AMOR2 in the table of Figs. 9A-9C shows the numbers of the 50 particle features described above that were selected for use with this net. The first and second outputs of this net correspond to the probabilities that the particle is or is not amorphous. Whichever probability is higher constitutes the decision of the net. If the net decides the particle is amorphous, then the analysis of the particle ends.

If it is decided that the particle is not amorphous, then the Round/Not Round Classifier Net is applied, which decides whether the particle shape exhibits a predetermined amount of roundness. For the preferred embodiment, this net includes 39 inputs for a selected subset of the 198 particle features described above, 20 neurons in the hidden layer, and two neurons in the output layer. The column entitled HPF ROUND/NOT ROUND2 in the table of Figs. 9A-9C shows the numbers of the 39 particle features described above that were selected for use with this net. The first and second outputs of this net correspond to the probabilities that the particle is or is not 'round'. Whichever probability is highest constitutes the decision of the net.

If it is decided that the particle is 'round', then the Round Cells Classifier Net is applied, which decides whether the particle is a Red Blood Cell (RBC), a White Blood Cell (WBC), a Non-Squamous Epithelial cell (NSE) such as a Renal Epithelial cell or a transitional Epithelial cell, or Yeast (YEAST). For the preferred embodiment, this net includes 18 inputs for a selected subset of the 198 particle features described above, 3 neurons in the hidden layer, and three neurons in the output layer. The column entitled HPF Round4 in the table of Figs. 9A-9C shows the numbers of the 18 particle features described above that were selected for use with this net. The first, second, third and fourth outputs of this net correspond to the probabilities that the particle is a RBC, a WBC, a NSE or YEAST, respectively. Whichever probability is highest constitutes the decision of the net.

If it is decided that the particle is not 'round', then the Not Round Cells Classifier Net is applied, which decides whether the particle is a Red Blood Cell (RBC), a White Blood Cell (WBC), a Non-Squamous Epithelial cell (NSE) such as a Renal Epithelial cell or a transitional Epithelial cell, an Unclassified Crystal (UNCX), Yeast (YEAST), Sperm (SPRM) or Bacteria (BACT). For the preferred embodiment, this net includes 100 inputs for a selected subset of the 198 particle features described above, 20 neurons in the hidden layer, and seven neurons in the output layer. The column entitled HPF NOT ROUND7 in the table of Figs. 9A-9C shows the numbers of the 100 particle features described above that were selected for use with this net. The seven outputs of this net correspond to the probabilities that the particle is a RBC, a WBC, a NSE, a UNCX, a YEAST, a SPRM or a BACT. Whichever probability is highest constitutes the decision of the net.

Referring back to Fig. 7A, once the Neural Net Classification has decided the particle type, an ART by Abstention Rule is applied, to determine if the particle should be classified as an artifact because none of the nets gave a high enough classification probability factor to warrant a particle classification. The ART by Abstention Rule applied by the preferred embodiment reclassifies four types of particles as artifacts if certain criteria are met. First, if the final classification by the net structure is Yeast, and the YEAST probability was less than 0.9 at the Not Round Cells Classification Net, then the particle is reclassified as an artifact. Second, if the final classification by the net structure was a NSE, and the NSE probability was less than 0.9 at the Round Cells Classifier Net, or the round probability was less than 0.9 at the Round/Not Round Classifier Net, then the particle is reclassified as an artifact. Third, if the final classification by the net structure was a not round NSE, and the NSE probability was less than 0.9 at the Not Round Cells Classifier Net, then the particle is reclassified as an artifact. Fourth, if the final classification by the net structure was a UNCX, and the UNCX probability was less than 0.9 at the Not Round Cells Classifier Net, or the round probability was less than 0.9 at the Round/Not Round Classifier Net, then the particle is reclassified as an artifact.

The next step shown in Fig. 7A is a partial capture test, which is applied to all particles surviving the ART by Abstention Rule. The partial capture test determines if the particle should be classified as an artifact because the particle boundary hits one or more particle image patch boundaries, and thus only part of the particle image was captured by the patch image. As with the LPF scan, the partial capture test of the preferred embodiment basically looks at the pixels forming the boundary of the patch to ensure they represent background pixels. This is done by collecting a cumulative intensity histogram on the patch boundaries, and calculating lower and upper limits of these intensities. The lower limit in the preferred embodiment is either the third value from the bottom of the histogram, or the value 2% from the bottom of the histogram, whichever is greater. The upper limit is either the third value from the top of the histogram, or the value 2% from the top of the histogram, whichever is greater. The patch image is deemed a partial capture if the lower limit is less than 185 (e.g. of a pixel intensity that ranges from 0 to 255). The patch is also deemed a partial capture if the upper limit is less than or equal to 250 and the lower limit is less than 200 to take care of the case where the halo of a particle image touches the patch image boundary.

All particles surviving the partial capture test maintain their classification. All particles deemed a partial capture are further subjected to an ART by Partial Capture Rule, which reclassifies such particles as an artifact if any of the following 6 criteria are met:
1. If it was associated with the HPF1 size box.
2. If it was not classified as either a RBC, WBC, BYST, OR UNCX.
3. If it was classified as a RBC, and if it was associated with the HPF2 size box or had a Stretch Value greater than or equal to 5.0.
4. If it was classified as a WBC, and had a Stretch Value greater than or equal to 5.0.
5. If it was classified as a UNCX, and had a Stretch Value greater than or equal to 10.0.
6. If it was classified as a BYST, and had a Stretch Value greater than or equal to 20.0.
If none of these six criteria are met by the particle image, then the neural net classification is allowed to stand even though the particle was deemed a partial capture, and the HPF scan process is complete. These six rules were selected to keep particle classification decisions in cases where partial capture does not distort the neural net decision making process, while eliminating those particles where a partial capture would likely lead to an incorrect decision.

To best determine which features should be used for each of the neural nets described above, the feature values input to any given neural net are modified one at a time by a small amount, and the effect on the neural net output is recorded. Those features having the greatest affect on the output of the neural net should be used.

### Post Processing Decision Making

Once all the particles images are classified by particle type, post decision processing is performed to further increase the accuracy of the classification results. This processing considers the complete set of results, and removes classification results that as a whole are not considered trustworthy.

User settable concentration thresholds are one type of post decision processing that establishes a noise level threshold for the overall results. These thresholds are settable by the user. If the neural net classified image concentration is lower than the threshold, then all the particles in the category are reclassified as artifacts. For example, if the HPF scan finds only a few RBC's in the entire sample, it is likely these are erroneous results, and these particles are reclassified as artifacts.

Excessive amorphous detection is another post decision process that discards questionable results if too many particles are classified as amorphous. In the preferred embodiment, if there are more than 10 non-amorphous HPF patches, and more than 60% of them are classified to be amorphous by the neural nets, then the results for the entire specimen are discarded as unreliable.

The preferred embodiment also includes a number of LPF false positive filters, which discard results that are contradictory or questionable. Unlike HPF particles, LPF artifacts come in all shapes and sizes. In many cases, given the resolution of the system, it is impossible to distinguish LPF artifacts from true clinically significant analytes. In order to reduce false positives due to LPF artifacts, a number of filters are used to look at the aggregate decisions made by the nets, and discard those results that simply make no sense. For example, if the HPF WBC count is less than 9, then all LPF WBCC's should be reclassified as artifacts, since clumps of white blood cells are probably not present if white blood cells are not found in significant numbers. Further, the detection of just a few particles of certain types should be disregarded, since it is unlikely that these particles are present in such low numbers. In the preferred embodiment, the system must find more than 3 LPF UNCX detected particles, or more than 2 LPF NSE detected particles, or more than 3 LPF MUC detected particles, or more than 2 HPF SPRM detected particles, or more than 3 LPF YEAST detected particles. If these thresholds are not met, then the respective particles are re-classified as artifacts. Moreover, there must be at least 2 HPF BYST detected particles to accept any LPF YEAST detected particles.

### Neural Net Training and Selection

Each neural net is trained using a training set of pre-classified images. In addition to the training set, a second smaller set of pre-classified images is reserved as the test set. In the preferred embodiment, the commercial program NeuralWare, published by NeuralWorks, is used to perform the training. Training stops when the average error on the test set is minimized.

This process is repeated for multiple starting seeds and net structures (i.e. number of hidden layers and elements in each layer). The final choice is based not only on the overall average error rate, but also to satisfy constraints on errors between specific classes. For example, it is undesirable to identify a squamous epithelial cell as a pathological cast because squamous epithelial cells occur normally in female urine specimens, but pathological casts would indicate an abnormal situation. Therefore, the preferred embodiment favors nets with SQEP to UNCC error rates less than 0.03 at the expense of a greater misclassification rate of UNCC as SQEP. This situation somewhat decreases the sensitivity to UNCC detection, but minimizes false positives in female specimens, which with sufficiently high rate of occurrence would render the system useless since a high proportion of female urine samples would be called abnormal. Thus, it is preferable to employ a method that not only minimizes the overall error rate, but also considers the cost of specific error rates in the selection of the "optimal" nets, and build this selection criterion into the net training.

As can be seen from the forgoing, the method and apparatus of the present invention differs from the prior art in the following respect. In the prior art, at each stage of processing, a classification of a particle is made, with the remaining unclassified particles considered artifacts or unknowns. In order to minimize the classification of particles as artifacts or unknowns, the range of values for classification at each stage is large. This can cause misclassification of particles.

In contrast, the range of values for classification at each stage of the present invention is narrow, resulting in only particles having greater probability of certainty being so classified, and the remainder being classified in a classification for further processing that is related to the previous stage of processing. The multi-net structure of the present invention utilizes subgroups of the particle features to partition the decision space by an attribute or physical characteristic of the particle (e.g. its roundness) and/or by individual and group particle classification that includes an unknown category. This partitioned decision space, which produces probability factors at each decision, more efficiently uses the available information, which of necessity is finite, and effectively allows this information to be used to make the same number of total decisions, but with fewer possible outcomes at each stage. Preprocessing and post processing enables heuristic information to be included as part of the decision making process. Post processing enables the use of contextual information either available from other sources or gleaned from the actual decision making process to further process the probability factors and enhance the decisions. The use of neural net certainty measures at multiple stages of processing forces images to an abstention class, i.e. artifact. In some sense one can view this multi network approach as forcing the image data to run a gauntlet where at each stage of the gauntlet it is quite likely to be placed in an "I don't know" category. This is much more powerful than simply running through a single net because in essence what is accomplished is multiple fits of the data to templates which are much better defined than a single template could be, which allows effective use of the information. Another way to think about this is that data in different subspaces is analysed, and is required it to fit perfectly in some sense, or well enough, with the characteristics of that subspace or else it falls out of the race. The training of the neural nets involves not simply a single pass through the training set, but selecting from a number of nets and then reducing the feature vector size. The high number of features themselves, each focussing on a particular set of physical characteristics, increases the accuracy of the system.

## Claims

1. An imaging apparatus for detecting and classifying biological particles contained in an individual human urine sample into a plurality of different final classification classes including the classes of non-squamous epithelial cell, unclassified crystal, mucus, sperm, yeast, budding yeast, white blood cell clumps, and white blood cells on the basis of a plurality of features of shape, symmetry, skeletonization, size, photometric properties, and texture of images of the particles, the apparatus comprising:
means for extracting the plurality of features from the image of a particle;
means for selecting and processing a first subgroup of the extracted features to make a first quantitative determination of allocation to a class or classes of particle;
means for selecting and processing a second subgroup of the extracted features to determine a final classification class to which the said particle belongs, the second subgroup being selected in dependence upon the first determination;
means for counting the respective numbers of the particles in each final classification class, and
means for accepting or rejecting the final classification of the particle or particles counted in a selected final classification class in dependence upon comparison of the respective number counted with a predetermined classification class count threshold for the selected final classification class if the final classification is any one of non-squamous epithelial cell, unclassified crystal, mucus, sperm, and yeast, and in dependence upon comparison of the number counted in a predetermined other final classification class with a predetermined classification class count threshold for the said other final classification class if the final classification class is white blood cell clump, the said other final classification class being white blood cell.

2. An apparatus according to claim 1, **characterised in that** the means for selecting and processing a first subgroup is adapted to determine to which one of a plurality of groups of classification classes the particle belongs; and **in that** the means for selecting and processing a second subgroup is adapted to select the second subgroup in dependence upon the determined classification class group.

3. An apparatus according to claim 1 or 2, **characterised in that** the selecting and processing means are such that each of the determinations includes assigning a probability factor, and include means for modifying the determined classification class to an artifact classification in the event one or more of the probability factors used to classify the particle fails to exceed a predetermined threshold value.

4. An apparatus according to claim 1, 2 or 3, **characterised by** artifact means for determining whether the particle is an artefact on the basis of a predetermined physical characteristic of the particle, and for bypassing the means for selecting and processing a second subgroup in response to an affirmative determination by the artifact means.

5. An apparatus according to claim 4, **characterised in that** the artifact means includes means for determining whether a boundary of the image of a particle intersects a border of an image field containing the image of the said particle, and means for modifying the determined classification class of the particle to an artifact classification in the event the boundary and border are determined to intersect.

6. An apparatus according to any one of claims 1 to 5, **characterised in that** the means for selecting and processing comprise a plurality of neural nets.

7. An apparatus according to claim 6, **characterised by** means for training the neural nets by selecting and processing the subgroups of the extracted features using a training set of known particles along with a test set of particles, wherein the training means repeatedly trains the neural nets until the accuracy rate of the determination of classification class of the test set of particles reaches a predetermined value.

8. An apparatus according to any one of claims 1 to 7, **characterised in that** the extraction means includes:
means for defining a first line segment that crosses a centroid of the image of a particle;
means for defining a second and third line segment for points along the first line segment that orthogonally extend away from the first line segment in opposite directions; and
means for utilizing the difference between the lengths of the second and third line segments to calculate an extracted symmetry feature of the image of the said particle.

9. An apparatus according to any one of claims 1 to 8, **characterised in that** the extraction means further includes means for orthogonally collapsing a boundary of the image of the said particle to form one or more line segments.

10. An apparatus according to any one of claims 1 to 9, **characterised in that** at least one of the plurality of extracted features is a measure of a spatial distribution of the image of a particle, and at least another one of the plurality of extracted features is a measure of a spatial frequency domain of the image of a particle.

## Patentansprüche

1. Bilderzeugungsvorrichtung zum Erfassen und Klassifizieren von biologischen Partikeln, die in einer individuellen menschlichen Urinprobe enthalten sind, in eine Mehrzahl von unterschiedlichen Endklassifizierungsklassen einschließlich der Klassen Nicht-Plattenepithelzelle, unklassifiziertes Kristall, Schleim, Sperma, Hefe, angehende Hefe, weiße Blutkörperchenklumpen und weiße Blutkörperchen auf der Basis mehrerer Merkmale von Form, Symmetrie, Skeletonisierung, Größe, fotometrische Eigenschaften und Textur von Bildern der Partikel, wobei die Vorrichtung Folgendes umfasst:
Mittel zum Extrahieren der Mehrzahl von Merkmalen vom Bild eines Partikels;
Mittel zum Selektieren und Verarbeiten einer ersten Untergruppe der extrahierten Merkmale, um eine erste quantitative Bestimmung der Zuordnung zu (einer) Partikelklasse(n) zu machen;
Mittel zum Selektieren und Verarbeiten einer zweiten Untergruppe der extrahierten Merkmale, um eine Endklassifizierungsklasse zu bestimmen, zu der der genannte Partikel gehört, wobei die zweite Untergruppe in Abhängigkeit von der ersten Bestimmung gewählt wird;
Mittel zum Zählen der jeweiligen Partikelzahlen in jeder Endklassifizierungsklasse, und
Mittel zum Akzeptieren oder Ablehnen der Endklassifizierung des/der Partikel(s), die in einer ausgewählten Endklassifizierungsklasse gezählt wurde(n), in Abhängigkeit von einem Vergleich der jeweiligen gezählten Zahl mit einer vorbestimmten Klassifizierungsklassen-Schwellenzahl für die gewählte Endklassifizierungsklasse, wenn die Endklassifizierung eine der folgenden ist: Nicht-Plattenepithelzelle, unklassifiziertes Kristall, Schleim, Sperma und Hefe, und in Abhängigkeit von einem Vergleich der gezählten Zahl in einer vorbestimmten anderen Endklassifizierungsklasse mit einer vorbestimmten Klassifizierungsklassen-Schwellenzahl für die genannte andere Endklassifizierungsklasse, wenn die Endklassifizierungsklasse ein weißer Blutkörperchenklumpen ist, wobei die genannte andere Endklassifizierungsklasse weiße Blutkörperchen sind.

2. Vorrichtung nach Anspruch 1, **dadurch gekennzeichnet, dass** das Mittel zum Selektieren und Verarbeiten einer ersten Untergruppe die Aufgabe hat zu bestimmen, zu welcher aus einer Mehrzahl von Gruppen von Klassifizierungsklassen der Partikel gehört; und **dadurch**, dass das Mittel zum Selektieren und Verarbeiten einer zweiten Untergruppe die Aufgabe hat, die zweite Untergruppe in Abhängigkeit von der bestimmten Klassifizierungsklassengruppe zu wählen.

3. Vorrichtung nach Anspruch 1 oder 2, **dadurch gekennzeichnet, dass** die Selektions- und Verarbeitungsmittel derart sind, dass jede Bestimmung das Zuweisen eines Wahrscheinlichkeitsfaktors beinhaltet, und Mittel zum Modifizieren der bestimmten Klassifizierungsklasse zu einer Artefakt-Klassifikation beinhalten, falls ein oder mehrere der zum Klassifizieren des Partikels verwendeten Wahrscheinlichkeitsfaktoren einen vorbestimmten Schwellenwert nicht überschreitet/n.

4. Vorrichtung nach Anspruch 1, 2 oder 3, **gekennzeichnet durch** ein Artefakt-Mittel zum Bestimmen, ob der Partikel ein Artefakt ist, auf der Basis einer vorbestimmten physikalischen Eigenschaft des Partikels, und zum Umgehen der Mittel zum Selektieren und Verarbeiten einer zweiten Untergruppe als Reaktion auf eine positive Bestimmung **durch** Artefakt-Mittel.

5. Vorrichtung nach Anspruch 4, **dadurch gekennzeichnet, dass** das Artefakt-Mittel Mittel zum Bestimmen, ob eine Grenze des Bildes eines Partikels eine Grenze eines Bildfeldes schneidet, das das Bild des genannten Partikels enthält, und Mittel zum Modifizieren der bestimmten Klassifizierungsklasse des Partikels in eine Artefakt-Klassifizierung beinhaltet, falls die Begrenzung und die Grenze als sich schneidend bestimmt werden.

6. Vorrichtung nach einem der Ansprüche 1 bis 5, **dadurch gekennzeichnet, dass** die Mittel zum Selektieren und Verarbeiten mehrere neuronale Netze umfassen.

7. Vorrichtung nach Anspruch 6, **gekennzeichnet durch** Mittel zum Trainieren der neuronalen Netze **durch** Selektieren und Verarbeiten der Untergruppen der extrahierten Merkmale mit einem Trainingssatz von bekannten Partikeln zusammen mit einem Testsatz von Partikeln, wobei die Trainingsmittel die neuronalen Netze wiederholt trainieren, bis die Genauigkeitsrate der Bestimmung der Klassifizierungsklasse des Testsatzes von Partikeln einen vorbestimmten Wert erreicht.

8. Vorrichtung nach einem der Ansprüche 1 bis 7, **dadurch gekennzeichnet, dass** das Extraktionsmittel Folgendes beinhaltet:
Mittel zum Definieren eines ersten Liniensegments, das ein Zentroid des Bildes eines Partikels überquert;
Mittel zum Definieren eines zweiten und dritten Liniensegments für Punkte entlang des ersten Liniensegments, die orthogonal in entgegengesetzten Richtungen von dem ersten Liniensegment weg verlaufen; und
Mittel zum Nutzen der Differenz zwischen den Längen des zweiten und des dritten Liniensegments zum Berechnen eines extrahierten Symmetriemerkmals des Bildes des genannten Partikels.

9. Vorrichtung nach einem der Ansprüche 1 bis 8, **dadurch gekennzeichnet, dass** das Extraktionsmittel ferner Mittel zum orthogonalen Falten einer Umgrenzung des Bildes des genannten Partikels beinhaltet, um ein oder mehrere Liniensegmente zu bilden.

10. Vorrichtung nach einem der Ansprüche 1 bis 9, **dadurch gekennzeichnet, dass** wenigstens eines aus der Mehrzahl von extrahierten Merkmalen ein Maß für eine räumliche Verteilung des Bildes eines Partikels ist und wenigstens ein anderes aus der Mehrzahl von extrahierten Merkmalen ein Maß für einen räumlichen Frequenzbereich des Bildes eines Partikels ist.

## Revendications

1. Appareil d'imagerie pour détecter et classer des particules biologiques contenues dans un échantillon individuel d'urine humaine en une pluralité de classes de classification finale différentes comportant les classes de cellule épithéliale non squameuse, cristal non classé, mucus, sperme, levure, levure bourgeonnante, groupes de globules blancs, et globules blancs selon une pluralité de caractéristiques de forme, symétrie, squelettisation, taille, propriétés photométriques, et texture d'images des particules, l'appareil comprenant :
un moyen pour extraire la pluralité de caractéristiques de l'image d'une particule ;
un moyen pour sélectionner et traiter un premier sous-groupe des caractéristiques extraites afin de réaliser une première détermination quantitative d'allocation à une ou des classes de particules ;
un moyen pour sélectionner et traiter un second sous-groupe des caractéristiques extraites afin de déterminer une classe de classification finale à laquelle appartient ladite particule, le second sous-groupe étant sélectionné en fonction de la première détermination ;
un moyen pour compter les nombres respectifs des particules dans chaque classe de classification finale, et
un moyen pour accepter ou rejeter la classification finale de la ou des particules comptées dans une classe de classification finale sélectionnée en fonction de la comparaison du nombre respectif compté à un seuil de compte de classe de classification prédéterminé pour la classe de classification finale sélectionnée si la classification finale est l'une quelconque des cellule épithéliale non squameuse, mucus, sperme, et levure, et en fonction de la comparaison du nombre compté dans une autre classe de classification finale prédéterminée à un seuil de compte de classe de classification prédéterminé pour ladite autre classe de classification finale si la classe de classification finale est un groupe de globules blancs, ladite autre classe de classification finale étant un globule blanc.

2. Appareil selon la revendication 1, **caractérisé en ce que** le moyen pour sélectionner et traiter un premier sous-groupe est adapté pour déterminer le groupe parmi une pluralité de groupes de classes de classification auquel la particule appartient ; et **en ce que** le moyen pour sélectionner et traiter un second sous-groupe est adapté pour sélectionner le second sous-groupe en fonction du groupe de classe de classification déterminé.

3. Appareil selon la revendication 1 ou 2, **caractérisé en ce que** les moyens pour sélectionner et traiter sont tels que chacune des déterminations comporte l'assignation d'un facteur de probabilité, et comportent des moyens pour modifier la classe de classification déterminée en une classification d'artéfact dans le cas où un ou plusieurs des facteurs de probabilité utilisés pour classer la particule ne dépassent pas une valeur de seuil prédéterminée.

4. Appareil selon la revendication 1, 2 ou 3, **caractérisé par** un moyen d'artéfact pour déterminer si la particule est un artefact ou non en fonction d'une caractéristique physique prédéterminée de la particule, et pour contourner le moyen pour sélectionner et traiter un second-sous-groupe en réponse à une détermination affirmative par le moyen d'artéfact.

5. Appareil selon la revendication 4, **caractérisé en ce que** le moyen d'artéfact comporte un moyen pour déterminer si un contour de l'image d'une particule intersecte une bordure d'un champ d'image contenant l'image de ladite particule, et un moyen pour modifier la classe de classification déterminée de la particule en une classification d'artéfact au cas où il est déterminé que le contour et la bordure s'intersectent.

6. Appareil selon l'une quelconque des revendications 1 à 5, **caractérisé en ce que** les moyens pour sélectionner et traiter comportent une pluralité de réseaux neuronaux.

7. Appareil selon la revendication 6, **caractérisé par** un moyen pour former les réseaux neuronaux en sélectionnant et traitant les sous-groupes des caractéristiques extraites en utilisant un ensemble d'apprentissage de particules connues ainsi qu'un ensemble de particules de test, dans lequel le moyen de formation forme de façon répétée les réseaux neuronaux jusqu'à ce que le taux de précision de la détermination de la classe de classification de l'ensemble de particules de test atteigne une valeur prédéterminée.

8. Appareil selon l'une quelconque des revendications 1 à 7, **caractérisé en ce que** le moyen d'extraction comporte :
un moyen pour définir un premier segment de droite qui franchit un centroïde de l'image d'une particule ;
un moyen pour définir un deuxième et un troisième segment de droite pour des points situés le long du premier segment de droite qui s'écartent orthogonalement du premier segment de droite dans des sens opposés ; et
un moyen pour utiliser la différence entre les longueurs des deuxième et troisième segments de droite afin de calculer une caractéristique de symétrie extraite de l'image de ladite particule.

9. Appareil selon l'une quelconque des revendications 1 à 8, **caractérisé en ce que** le moyen d'extraction comporte en outre un moyen pour affaisser orthogonalement un contour de l'image de ladite particule afin de former un ou plusieurs segments de droite.

10. Appareil selon l'une quelconque des revendications 1 à 9, **caractérisé en ce qu'**au moins l'une d'une pluralité de caractéristiques extraites est une mesure d'une distribution spatiale de l'image d'une particule, et au moins une autre de la pluralité de caractéristiques extraites est une mesure d'un domaine de fréquence spatiale de l'image d'une particule.
